Europäisches Patentamt

European Patent Office

Office européen des brevets

(11) Publication number: **0 549 803 A1**

## EUROPEAN PATENT APPLICATION
### published in accordance with Art. 158(3) EPC

(21) Application number: **92913256.1**

(22) Date of filing: **22.06.92**

(86) International application number:
**PCT/JP92/00791**

(87) International publication number:
**WO 93/00476 (07.01.93 93/02)**

(51) Int. Cl.⁵: **D21H 17/20**, D21H 19/56, B32B 27/30, B32B 27/10

(30) Priority: **20.06.91 JP 174823/91**

(43) Date of publication of application:
**07.07.93 Bulletin 93/27**

(84) Designated Contracting States:
**AT CH DE DK ES FR GB IT LI NL SE**

(71) Applicant: **JUJO PAPER CO., LTD.**
**4-1, Oji 1-chome**
**Kita-ku Tokyo 114(JP)**
Applicant: **KABUSHIKI GAISHA NAKAMURA TOKU SHOHKAI**
**28, Kanda-higashimatsushitacho, Chiyoda-ku Tokyo 101(JP)**
Applicant: **TOHRITU KASEI KOHGYO CO. LTD.**
**16-9, Shinmei-minami 2-chome**
**Adachi-ku, Tokyo 121(JP)**

(72) Inventor: **SASAKI, Toshio, Jujo Paper Co., Ltd.,**
**New Products Research Lab., 21-1, Ohji 5-chome,**
**Kita-ku, Tokyo 114(JP)**
Inventor: **SATO, Tetuo, Jujo Paper Co., Ltd.,**
**Technology Developm. Center, 21-1, Ohji 5-chome,**
**Kita-ku, Tokyo 114(JP)**
Inventor: **UMEKI, Takemitu, Jujo Paper Co., Ltd.,**

**Technology Developm. Center, 21-1, Ohji 5-chome,**
**Kita-ku, Tokyo 114(JP)**
Inventor: **ASHIDA, Tetsusi Jujo Paper Co., Ltd.,**
**Liquid Packaging Center 21-2, Ohji 5-chome**
**Kita-ku Tokyo 114(JP)**
Inventor: **SUZUKI, Shinichi Jujo Paper Co., Ltd.,**
**Liquid Packaging Center 21-2, Ohji 5-chome**
**Kita-ku Tokyo 114(JP)**
Inventor: **KOBAYASHI, Yutaka Kabushiki Gaisha Nakamura**
**Toku Shohkai 28,**
**Kanda-higashimatsushitacho**
**Chiyoda-ku Tokyo 101(JP)**
Inventor: **HARASWA, Shigeo Kabushiki Gaisha Nakamura Toku**
**Shohkai 28, Kanda-higashimatsushitacho**
**Chiyoda-ku Tokyo 101(JP)**
Inventor: **WAIDA, Kohshi Tohritu Kasei Kohgyo Co., Ltd.**
**16-9, Shinmei-minami 2-chome**
**Adachi-ku Tokyo 121(JP)**

(74) Representative: **Brown, John David et al**
**FORRESTER & BOEHMERT**
**Franz-Joseph-Strasse 38**
**W-8000 München 40 (DE)**

(54) **PACKAGING MATERIAL AND METHODS OF MANUFACTURING AND DISPOSING OF SAID MATERIAL.**

(57) A packaging material and methods of manufacturing and disposing of said material. The packaging material, containing a polymer adjustable in water-solubility by varying the temperature of water used therefor and/or water-soluble resin and vegetable fibers as reinforcing components, is strong enough for the use under the

Rank Xerox (UK) Business Services
(3. 10/3.6/3.3. 1)

normal condition and usable for various kinds of packaging. The method enables efficient manufacture of a packaging material excellent in moisture- and water-proofness by: utilizing the molding method to be applied to normal thermoplastic resin; making a filmy matter from aforesaid polymer; or spreading aqueous solution of said polymer on the material paper sheet or using wet laminates of material paper sheets. The packaging material of this invention is dissolved into solution by appropriate warm water, need not be removed from paper sheets or waste paper stock which are wrapped or bound by this packaging material, and, when used as waste paper stock, exhibits effects of increasing the strength of the product.

Field of the Invention

The instant invention relates to a packaging material for packing goods to be packed such as waste paper stock, and methods of manufacturing and disposing of said material.

More particularly, the invention relates to a packaging material comprising a warm water-soluble polymer and/or its composition, and methods of manufacturing and disposing of said material wherein said disposing method comprises bringing the bundle wrapped or bound by the packaging material into contact with warm water in order to dissolve said polymer, thereby unwrapping the bundle to recover the contents.

Background of the Prior Art

Plastics, such as polyolefins, polyesters, polycarbonates, polyvinyl chlorides, polystyrenes, ABS, and the like are widely applied as packaging materials for years because they are excellent in physical and chemical properties, and are easily obtained in large quantities. On the other hand, they are a cause of environmental pollution because they are too stable in the atmosphere. Further, they generate high combustion energy and sometimes emit harmful gases during combustion. The high energy often causes damage to the furnace.

Recently, a large quantity of waste paper sheets are being discarded from offices and households and recovered for reuse in a stand point of saving resources and maintaining environment. In the recycling process, various packaging materials in shape and quality, such as vinyls, wires, plastic bands, films or ropes, and the like, are employed to make a bundle by wrapping or binding goods to be packed such as the waste paper stock; however, most of packaging materials have to be removed prior to pulping process by many hands.

In order to protect the bundle of waste paper sheets from being unwrapped during storage or transportation, these packaging materials are made from materials stable to neutral to acidic aqueous medium such as rain water and moisture, and having a mechanical strength.

However these conventional packaging materials remain intact as foreign matter in pulp slurry after maceration of waste paper sheets at a paper manufacturing plant; thus, they have to be removed from the bundle prior to pulping process by many hands.

Such removing operation is time-consuming, particularly for large bundles, and intricate, requiring careful selection of an unwrapping tool from the group consisting of knives, cutters, pincers, scissors, and the like so as to be suitable to the packaging materials.

Although aforesaid foreign matter can be collected through a screen or a cleaner after maceration of the bundle with the packaging material during the pulping process, the recovering process becomes more manifold and uneconomic.

In order to solve the above-mentioned problems, a method for the manufacture of a moisture-proof packaging paper (Japanese Patent Laid-Open Publication No.50-36711), said method comprising coating an aqueous emulsion blend of paraffin wax and a maleinized petroleum resin on kraft papers by the conventional coating method, a usage of a specific polymer or copolymer comprising 50% or more of 1,2-bonding configuration of butadiene (Japanese Patent Publication No.44-24719), a method of manufacturing waterproof paper sheets comprising adding and fixing a wax-emulsion to a pulper together with a thermosetting high-molecular hardener or a paper strengthening agent, a sizing agent, and aluminum sulfate, and afterthen making paper, a usage of a coating liquid prepared by blending a synthetic rubber latex and a wax-emulsion (Japanese Patent Publication No.55-22597), and so on are disclosed in the prior art. However, there is still a need for improvement in moisture- and water-proof of the conventional packaging materials and in easiness for handling and recovering waste paper stock.

Description of the Invention

An object of the invention is to provide a packaging material which is biodegradable not so as to pollute or destroy nature; which burns without the evolution of gases harmful to human beings while generating relatively low combustion energy; which is stable in neutral to weakly acidic water such as rain water; which is good in strength, barrier properties, transparency, heat sealing properties, moisture permeability, printability, and the like; and further which comprises a warm water-soluble polymer. And further the object of the present invention is to provide method of manufacturing said packaging material and disposing method without taking much time and steps when unwrapping a bundle of waste stock.

After intensive investigation, the inventors have found that the intended objects can be attained by providing a packaging material comprising a warm water-soluble polymer and/or its composition; a method

3

of manufacturing said packaging material by making a filmy matter from said polymer or spreading an aqueous solution of said polymer on a material paper sheet; and a disposing method wherein a bundle of goods to be packed with being wrapped by said packaging material can be easily disposed by simply making the bundle come in contact with warm water.

Thus, according to claim 1 of the invention, there is provided a packaging material comprising a polymer or its composition wherein said polymer is insoluble in water at temperatures below a predetermined one, while at levels above the predetermined temperature the polymer or its composition becomes water-soluble.

According to claim 2 of the invention, there is provided a packaging material claimed in claim 1 wherein said polymer or its composition further contains boric acid or borax.

According to claim 3 of the invention, there is provided a packaging material claimed in claim 1 or 2 wherein said polymer is a modified polyvinyl alcohol resin.

According to claim 4 of the invention, there is provided a packaging material claimed in claims 1 to 3 wherein said polymer or its composition further comprises a water-soluble resin and/or vegetable fiber as a reinforcing component.

According to claim 5 of the invention, there is provided a packaging material wherein the packaging material claimed in claim 1 is laminated with at least one material paper sheet.

According to claim 6 of the invention, there is provided a method of the manufacture of a packaging material wherein said method comprises forming a filmy matter from the polymer or its composition claimed in claim 1.

According to claim 7 of the invention, there is provided a method according to claim 6 wherein said method comprises forming a filmy matter from the boric acid- or borax-containing polymer or its composition claimed in claim 1.

According to claim 8 of the invention, there is provided a method of the manufacture of a packaging material wherein said method comprises spreading an aqueous solution of the polymer or its composition as claimed in claim 1 or spreading said aqueous solution which further contains boric acid and/or borax on a material paper sheet by the conventional method, and subsequently drying the resulting sheet.

According to claim 9 of the invention, there is provided a method of the manufacture of a packaging material wherein said method comprises laminating two or more material paper sheets using an aqueous solution of the polymer or its composition as claimed in claim 1 as an adhesive layer, or using said aqueous solution which further contains boric acid and/or borax, and subsequently drying the resulting laminated sheet.

According to claim 10 of the invention, there is provided a method of the manufacture of a packaging material wherein said method comprises laminating a material paper sheet on the layer of the polymer or its composition claimed in claims 1 or 5 as the packaging material by the aid of an adhesive.

According to claim 11 of the invention, there is provided a method claimed in claims 6~10 wherein said polymer is a modified polyvinyl alcohol resin.

According to claim 12 of the invention, there is provided a method for disposing a bundle of goods to be packed with being wrapped or bound by the packaging material as claimed in claim 1 or 5 wherein said method comprises making the bundle come in contact with appropriate warm water which can make said polymer being solved.

According to claim 13 of the invention, there is provided a method claimed in claim 12 wherein said good to be packed is waste paper stock.

According to claim 14 of the invention, there is provided a method claimed in claim 12 wherein said method comprises wrapping or binding the goods to be packed by the packaging material as claimed in claim 1 or 5 in the form of a binding material selected from the group consisting of strips, bands, ropes, or tapes, and then making the bundle come in contact with warm water which can make said polymer being solved.

Examples of the polymer according to the present invention, wherein said polymer is insoluble in water at temperatures below a predetermined one, while at levels above the predetermined temperature the polymer or its composition becomes water-soluble, include modified polyvinyl alcohol resins, polyvinyl alcohol resins, condensation polymers, natural resins such as cellulose. Typical examples include the following, which by no means limit the invention.

(1) Synthetic resins such as saponified polyvinyl acetate resins.

(2) A mixture of, e.g. saponified polyvinyl acetate resins and glycerols.

For example, a mixture blended at room temperature of 50 to 95 % by mole of saponified polyvinyl acetate (wherein the saponification value is 20 to 99.9 % by mole, preferably 80 to 90 % by mole, polymerization degree is 1000 to 3000, preferably 1500 to 2500, and the polymer is one which is soluble in water at 15 to 120 °C, preferably 20 to 85 °C) and 5 to 50 % by mole of glycerol.

(3) Synthetic resins such as saponified copolymer resins prepared from vinyl acetate and a monomer having carboxyl or amino group.

(4) Grafted copolymers of saponified polyvinyl acetate resins grafted with a polyvinyl alcohol.

For example the graft polymerization is carried out by grafting a polyvinyl alcohol to a saponified polyvinyl acetate in the presence of a peroxide catalyst at 50 to 200 °C.

(5) Condensation polymers, such as polyethyleneterephtharates, having weak acid / weak base radicals such as carboxyl and amino group in the polymer backbone.

(6) Acrylic resins.

(7) Heat-treated or water-proofed cellulose prepared from methyl cellulose, hydroxyethyl cellulose, hydroxypropylmethyl cellulose, carboxymethyl cellulose, and the like.

The predetermined temperature is a given temperature selected from the temperatures of water which is present in circumstances with which the polymer makes contact. Such temperature of water present in circumstances falls 0 °C or below in winter and may raise to 40 °C or above in summer; therefore, the polymer according to the invention must be such one which becomes insoluble in water below the predetermined temperature such as 10 °C, 25 °C, 40 °C or above selected from the temperature of water in circumstances with which the polymer makes contact.

One of examples of the predetermined temperature is the temperature of process water to be fed into a pulper in which the packaging material is treated.

Solubilization temperature of the polymer varies with the polymer design, the degree of crystallization, the degree of modification of the polymer, its blends and blend ratios, and the like.

These high-molecular polymers are not only excellent in mechanical strengths but also biodegradable not so as to pollute or destroy nature, in addition they burn without the evolution of gases harmful to human beings while generating relatively low combustion energy, are stable in neutral to weakly acidic water such as rain water and are easily soluble when they contact with the above-described conditioned warm water.

Further, the polymers have following characteristics:

1. They are transparent, and good in luster; therefore, emphasize the beauty of the bundle.

2. They are good in moisture permeability and moisture absorbing property; therefore, dew condensation does not begin on the surface of the packaging material and they do not charge with electricity.

3. They are also good in elongation; therefore, stretch wrapping may be applied.

4. They are heat sealable in the same way as in polyethylenes; therefore, wrapping is easy.

5. They may be printed by use of cellophane inks without pretreatment; therefore, they enhance the value of goods.

6. They are strippable; therefore, can be employed as the mold releases when molding polyethylene resins, epoxy resins, and the like.

7. They are good in tensile strength and tear strength.

8. They are resistant to oil and solvent such as mineral oils, animal and vegetable oils, organic solvents, and the like.

9. They can be bonded with an adhesive.

10. They are good in gas-barrier properties; therefore, impermeable to $O_2$, $N_2$, $H_2$, $CO_2$ gas, or perfumes.

11. They are thermoplastic; therefore, can be molded readily by the molding method to be applied to the conventional thermoplastic resin in order to form filmy matter such as film and sheet, bags, belts, and the like.

Binding or uniting materials, such as belts, bands, tapes, ropes made from film or sheet of the polymer are suitable for use in uniting or binding industrial and household goods, and machine parts. Twisted threads made from the film or sheet of the polymer of the present invention are useful as automatic binding threads for use in palletizing goods such as plastic cases or corrugated cardboard boxes for bottles and cans; in pelletizing chemicals, detergents, electrical appliances, surface coating materials, machine tools; in uniting consigned goods, printed matters, agricultural and marine products, and the like. Twisted threads made from film or sheet of the polymer are strong enough in terms of tensile strength, tear strength, impact strength and good in resistance to wear, and these properties remain unchanged when wetted or moistured if the solubilizing temperature of the polymer in water is adjusted suitably.

When the polymer is coated, impregnated, laminated or compounded with a water-soluble resin, a packaging material made from the reinforced polymer can be obtained.

Any suitable water-soluble resin may be employed so far as it is soluble in water at room temperature, e.g. celluloses such as methyl cellulose, hydroxyethyl cellulose, hydroxypropylmethyl cellulose, carboxymethyl cellulose, and synthetic resins such as polyvinyl alcohols. Commercially available water-soluble resins may also be employed.

A fibrous sheet, such as pulp sheet, impregnated or laminated with the polymer to enhance the strength and to give good properties in resistance to air or water may be employed as a packaging material of the invention. Similarly, a polymer composition reinforced with vegetable fiber may be employed.

Various additives or fillers such as inorganic fillers, pigments, aromas, stabilizers, and the like may be incorporated into the polymer composition, if necessary.

When boric acid or borax is blended to the polymer or its composition, or to an aqueous solution of the polymer or its composition, adequate cross-linking occurs, thereby improving water-vapor permeability, mechanical strengths and gas-barrier properties without deteriorating the above-described characteristics of the polymer.

Further, when boric acid or borax is added to an aqueous solution dissolving the polymer or its composition, the polymer is partially crosslinked, thereby increasing viscosity and wet tack of the resulting solution, preferably.

The necessary amount of boric acid or borax varies with the molecular weight of the polymer, the polymer structure, reaction temperature, and the like. Preferable amount of boric acid or borax is within the range in which gelation of the polymer does not occur. In addition said preferable amount of boric acid or borax is within the range in which said aqueous solution dissolving the polymer or its composition with boric acid or borax can be coated on a surface of a paper sheet by a conventional method or in which said aqueous solution can be formed as a filmy matter by a conventional method.

Any chemicals or crosslinking agent which acts as in the same way as boric acid or borax may be employed. Among them are azo dyes, resorcinol, catechol, fluoroglycynol, salicylic anilide, gallic acid, dihydroxy benzoic acid, and the like.

The packaging material of the present invention having the above-described properties can be applied for binding or wrapping various goods.

Examples of such goods include; organic or inorganic goods such as foodstuff, vessels or containers, electric appliances, electronic products, furniture, industrial parts, paper sheets, waste paper sheets, wood products, metals, glass products, plastics, ceramics, mineral oils, animal and vegetable oils, organic solvents, perfumes, and the like; goods which are harmful when making contact with the skin; goods having a bad smell; wastes from manufacturing plants or offices; domestic wastes; and goods which should be protected from insects.

More detailedly, the packaging material of the present invention can be suitably employed as the following products: plastic bags for waste milk packs, damp-dry garbage; plastic bags for agricultural chemicals; inner layers, inner bags, or bag-in-boxes for storing chemicals in a drum; plastic bags for transporting newspapers; hand bags or laminated film bags for cement, kaolin, talc, calcium carbonate, resins, and granules; stretchable or shrinkable films, and films for greenhouse; laminated paper sheets for baling newspapers or planographs; films or sheets having air cells for air-caps; foamed films or sheets; plastic nets for banking, or for packaging the root of seeding; packaging material laminated or pasted with a printed label of the aforesaid polymer or its composition. The scope of the present invention is not limited by these embodiments.

The followings are detailed description of the method of the present invention.

In a process aspect of the present invention, the packaging material may be manufactured from a filmy matter such as films or sheet which can be formed from the aforesaid polymer or its composition by the conventional method. In another process aspect of the present invention, the packaging material may be manufactured by spreading or coating on a material paper sheet an aqueous solution of the aforesaid polymer or its compositions as surface-coating solution or as adhesive layer-forming solution by the conventional method, wherein the aqueous solution may further contain boric acid or borax. In still another process aspect of the invention, the packaging material may be manufactured by wet lamination process from two or more of material paper sheets. In another process aspect of the invention, the packaging material may be fabricated by laminating a material paper sheet with aforesaid filmy matter of the polymer or its composition by the aid of an adhesive, or with the polymer layer on the laminated material sheet by the aid of an adhesive.

Any concentration of polymer may be employed in the aqueous polymer solution; however, when the concentration is more than 15 % by wt., the viscosity of the polymer solution becomes too high, with deterioration of the coating or film-forming ability, and inversely, when the concentration is less than 5 % by wt., desired moisture-and water-proofness cannot be obtained because the coated polymer layer is inferior in adhesion and mechanical strengths.

The aqueous solution to be coated is in an amount of 5 to 100 $g/m^2$ for a material paper sheet. When the amount is less than 5 $g/m^2$, desired moisture- and water-proofness cannot be obtained because of developing pin-holes and scuffing. The amount in excess of 100 g/m² is generally unnecessary and uneconomic.

After coated with the solution or wet laminated, the resulting sheet is dried in order to provide a final product.

The temperature for drying is an important factor to control the quality of the product such as moisture- and water-proofness.

Namely suitable temperature may range from room temperature to 130°C, preferably 70 to 120°C. A product sufficient in moisture-proofness and adhesiveness may be obtained within the range of temperature, as described below in Examples. High-temperature drying process is particularly suitable for a large-scale and high-speed operation to manufacture a high quality product on a stable state.

As is described above, according to the present invention, packing materials as filmy matter such as film or sheet may be formed by; utilizing the conventional molding process to be applied to normal thermoplastics or the emulsion coating process to be applied to synthetic rubber latex. Similarly, laminated packing materials may be formed by; spreading an aqueous solution of the polymer on a material paper sheet or wet-laminating a material paper sheet using the aqueous polymer solution followed by drying; or further laminating a material paper sheet with the filmy matter or with the polymer layer of the laminated sheet by
the aid of an adhesive.

The method of the invention enables the use of high-temperature drying and a high-speed fabricating machine; therefore, packaging materials good in moisture-and water-proofness may be obtained on a large scale and at high speed. In addition, such properties remain unchanged even when folded.

The following are illustrative of a waste disposal process according to the present invention.

Packaging materials of the invention are soluble in warm water, and are readily macerated, providing an aqueous slurry in which fibrous matter is suspended. The fibrous matter can be recycled for reuse without further treatment. The fibrous matter may be dried, if necessary.

According to a disposal method of the invention, a bundle of goods to be packed with being wrapped, bound or packed by the packaging material can be disposed by making the bundle come in contact with warm water in which the polymer of the packaging material dissolves. Thus, the bundle is unwrapped in the water without taking much time and manpower. The contents of the bundle may be readily recovered or subjected to after-treatment.

When waste paper stock is treated, the dissolved polymer may act as a paper strengthening or improving agent.

On the other hand, when escaped into the sewage system, the polymer according to the present invention may be collected as liquefied matter at the conventional disposal plant without causing environmental pollution.

The following are eminently illustrative of a disposal process for disposing waste paper stock which is bound or wrapped by the packaging material of the invention.

According to the invention, a bundle of waste paper stock packed or bound by aforesaid packaging material is contacted with warm water in order to dissolve the material thereinto prior to or during pulping step. The polymer or its composition which comprises the packaging material is stable in neutral water at room temperature; however, the polymer dissolves in warm water.

Although any contact method may be employed, spray coating prior to pulping step or treating in pulp slurry is preferable.

Usually, white water is fed into a pulper for maceration; therefore, the water in the pulper is acidic and very warm under which conditions the packaging material dissolves.

A water-soluble resin or vegetable fiber such as pulp may be added to the aforesaid polymer as reinforcing component in order to give desired strength, resistance to air and water to the polymer. In addition, the bundle can be dealt without taking much time or manpower, and the packaging material itself can be used as a resource for paper manufacturing, i.e. as a paper strengthening agent, therefore the effect of the paper strengthening may be expected.

As described above, the packaging material of the present invention comprises polymer or its composition having a specific water-solubility which can be changeable so as to be suitable to the temperature of its circumstance.

Further it is preferable to use a water-soluble resin or vegetable fiber such as pulp as reinforcing component in said polymer.

In addition the present invention provide a method of forming the packaging materials of the present invention. In the process aspect of the invention, the packaging material is formed : as filmy matter such as film or sheet by the conventional method from the above-described polymer and/or its composition which may further contain boric acid or borax; by spreading an aqueous solution of the polymer and/or its composition, which may contain further boric acid or borax, on a material paper sheet by the conventional method wherein said aqueous solution is used as coating solution or as adhesive layer-forming solution; from two or more material paper sheets by the wet lamination process; and by further bonding a material paper sheet by the aid of an adhesive, to the filmy matter or to the polymer layer on the laminated material paper sheet above-described.

When the packaging material is manufactured by using said aqueous solution dissolving said polymer, the amount of coated aqueous solution may be varied optionally depending on the desired thickness of adhesive layer. In addition, the packaging material having characteristics suited for the purpose may be obtained because the packaging materials of the present invention are good in moisture-proofness, resistance to oils, mechanical properties, gas-barrier properties, resistance to air and water, and the like.

When contact is made with water, the packaging material is readily converted into liquified matter. As a result, a burden of waste disposal problems, in any way such as recycling, transportation or flushing to the sewage system, may be greatly relieved.

The disposing method of the present invention comprises contacting a bundle with water which can dissolve said polymer and liquidizing said packaging material, thus it can be achieved without taking much time and manpower.

Further the packaging materials of the present invention are good in transparency, moisture permeability, moisture absorbing property, heat sealability, printability, pealability, gas-barrier property, resistance to oils, mechanical properties, air resistance, water resistance before being treated; therefore they can be widely used in packaging various goods.

It is considered that the disposing method of the present invention comprising binding a waste paper stock by the packaging material made from the polymer composition containing pulp as a reinforcing component is the most effective labor-saving method.

Benefits and advantages according to the present invention depend mostly on the characteristics of the polymer of the invention which is adjustable in water-solubility by varying the temperature of water used.

Binding materials, such as ropes, strips, bands, tapes, and the like, made from the packaging material of the invention exhibit mechanical strength significantly greater than the strengths exhibited by a polyethylene film or a polyvinyl chloride film. They exhibit strength several times that of most paper band. Such features are shown in Table 1.

| unit | | Packaging Material Film, String | Commercially Available Polyethylene Film | Commercially Available Vinyl Film | Test Method |
|---|---|---|---|---|---|
| Thickness | $\mu$m | 30 | 30 | 30 | |
| Tensile Strength | (Kg/mm$^2$) | 5.5 (4.5~6.5) | 1.9 (1.8~2.0) | 4.9 (2.1~7.8) | JIS-Z-1702 |
| Elongation | (%) | 275 (150~400) | 550 (500~600) | 127 (5~250) | ditto |
| Tear Strength | (Kg/mm) | 5.0 (1.5~8.5) | 0.65 (0.3~1.0) | 0.6 (0.4~0.8) | JIS-P-8116 |
| at 20°C, 65%RH | | | | | |

Detailed Description of the Preferred Embodiment

The following preferred embodiments are illustrative of the present invention and are not to be construed as limitative in any way.

Example 1

An aqueous solution containing 75 parts by weight of water, 20 parts by weight of a saponified polyvinyl acetate (saponification value; 98.5 % by mole, polymerization degree; 1100), 1.4 parts by weight of glycerol and 0.6 parts by weight of glyoxal was dried at a temperature below 100°C to provide a film having a thickness of about 20$\mu$m. The film was laminated with a mill wrapping sheet at 140°C by a hot-press method in order to form a laminate, thereby providing a laminated packaging material being excellent in resistance to air and water (the polymer film is water-soluble at 45°C).

8

A bundle of waste paper stock, comprising waste milk cartons pressed by a baler, which is packed by the packaging material remained intact when contact was made with water of which temperature was at room temperature.

When treated in a pulper under operation without any pretreatment, the packed paper stock was completely macerated without giving any foreign matter in the pulp slurry.

The white water supplied into the pulper for macerating and dissolving the packaging material was at a pH of 4.5 to 5.0 and at 45°C.

The content of said packaging material in the pulp slurry was 5 % by weight.

Example 2

A $CaCO_3$-containing paper sheet was impregnated with an aqueous solution of a grafted copolymer, prepared by grafting a polyvinyl alcohol to a saponified polyvinyl acetate resin in the presence of a peroxide catalyst, to provide a paper sheet impregnated with the polymer (the grafted copolymer is soluble in water at 45°C).

This paper sheet was stable to neutral water and was good in water-proofness.

When the sheet was fed in a stirred water at 50°C, the sheet was readily macerated, and a pulp slurry having a concentration of 5 % by wt. was obtained.

When treated with activated sludge in an aeration tank, the pulp slurry was disposed without any deleterious effect on the sludge performance such as a dehydration capability.

Example 3

10 Kg of Water, 3.75 g of glass fiber (6GYD), 1.85 g of pulp (NBKP) and a modified polyvinyl alcohol [saponification value ; 98.5 % by mole, 4 % viscosity ; 26 to 30 cps (at 20°C)] (it is designated as "PVA") (said PVA is soluble in water at 50°C) (6GYD/PVA = 67/33 by wt.) were blended at the proportions listed in Table 2 below, stirred (3000 rpm) in a pulper for 5 minutes. A paper sheet was made by means of a wire net (80 mesh), and the resultant sheet was pressed with the pressure of 3.5 kg/cm$^2$ and dried on an auto-dryer at 120°C for 3 minutes.

The following measurements were performed to evaluate the strength of each sample sheet and shown in Table 2.

Method of measuring the strength : TAPPI T-404, TS-66

Table 2

| PVA added (% by wt.) | 0 | 10 | 20 | 30 |
|---|---|---|---|---|
| Strength (Kg/cm) | 0.25 | 2.75 | 4.30 | 5.50 |

Example 4

A stack of newspapers, which were deposited with a height of about 50 cm and each folded four, was bound crosswisely by a long narrow strip with 40 mm in width, 30$\mu$m in thickness, said strip being made from the film prepared as in Example 1.

The bundle was treated in a pulper without any pretreatment, and regenerated paper sheets could be obtained without disturbing the fiber twists.

Example 5

A band-like strip with 40 mm in width, 30$\mu$m in thickness was made from the film fabricated by the method as described in Example 1 and a stack of newspapers, which were deposited with a height of about 50 cm was bound by the strip crosswisely.

The bundle was treated in a pulper without any pretreatment, and regenerated paper sheets could be obtained without disturbing the fiber twists.

Comparative Example 1

A polyethylene film with a thickness of 20μm was laminated with a mill wrapping sheet by the hot-press method, and a packaging material good in resistance to air and water was obtained.

A bundle of waste paper stock, comprising waste milk cartons pressed by a baler, which is packed by the packaging material remained intact when contact was made with water of which temperature was at room temperature.

When treated in a pulper under operation without any pretreatment as in Example 1, the packed paper stock could not be macerated, and a foreign substance was found in the pulp slurry.

Example 6

An aqueous solution containing 75 parts by weight of water, 20 parts by weight of a saponified polyvinyl acetate (saponification value; 98.5 % by mole, polymerization degree; 1100), 1.4 parts by weight of glycerol, 0.6 parts by weight of glyoxal, and optionally 0.2 parts by weight of boric acid or borax was spread on a thin mill wrapping sheet. The coated sheet was dried at a temperature below 100°C, and a packaging material having a film with a thickness of about 23 to 25μm, being good in gas-barrier properties and water-proofness was obtained (the film is water-soluble at 45°C).

A bundle of waste paper stock, comprising waste milk cartons pressed by a baler, which is packed by the packaging material remained intact when contact was made with water of which temperature was at room temperature.

When treated in a pulper under operation without any pretreatment, the packed paper stock was completely macerated without giving any foreign matter in the pulp slurry.

The white water supplied into the pulper for macerating and dissolving the packaging material was at a pH of 4.5 to 5.0 and at 45°C.

The content of said packaging material in the pulp slurry was 5 % by weight.

Example 7

A laminated packaging material was obtained from a $CaCO_3$-containing paper sheet by a wet-lamination process by use of an aqueous solution containing a grafted copolymer prepared by grafting a polyvinyl alcohol to a saponified polyvinyl acetate at 100°C in the presence of a peroxide catalyst, and further optionally containing 2 % by weight of boric acid and/or borax based on the amount of the copolymer (the resultant copolymer is soluble in water at 45°C).

The laminated packaging material was stable to neutral water, and was excellent in water-proofness.

The packaging material was readily macerated in a stirred white water at 50°C, and a pulp slurry having a concentration of 5 % by wt. was obtained.

When treated with activated sludge in an aeration tank, the pulp slurry was disposed without any deleterious effect on the sludge performance such as a dehydration capability.

Example 8

Two mill wrapping sheets were laminated by use of an aqueous solution as in Example 7. The laminated packaging material was also good in moisture permeability and mechanical properties like as the packaging material of Example 7. There was no curl and no abnormality in maceration.

In addition, a polymer film formed by use of an aqueous solution as in Example 7 was sandwiched between two mill wrapping sheets by the aid of an adhesive. The resultant laminated packaging material was similarly good in moisture permeability and mechanical properties like as the packaging material of Example 7. There was no curl and no abnormality in maceration.

Examples 9 to 12

In Example 9, a wet-laminated packaging material was made from a material paper sheet by varying the thickness of the material paper sheet or the laminated film (the polymer is water-soluble at 45°C). In Examples 10 to 11, a polymer film formed by use of an aqueous solution as in Example 7 was sandwiched between two mill wrapping sheets so as to obtain a packaging material. In Example 12, a mill wrapping sheet was laminated by use of an aqueous solution as in Example 7 by the wet lamination process like as in Example 7. The laminated polymer layer was further laminated with a mill wrapping sheet by the aid of an adhesive.

The measurements were performed to evaluate the tensile strength, elongation, tear strength, moisture permeability, maceration degree, resistance to water and coefficient of friction for each sample sheet.

The resultants are shown in Table 3.

Comparative Example 2

A packaging material was obtained by laminating a 20$\mu$m-thick polyethylene film with a mill wrapping sheet by a hot-press method and the resultant packaging material was good in gas-barrier property and water-proofness.

A bundle of waste paper stock, comprising waste milk cartons pressed by a baler, which is packed by the packaging material remained intact when contact was made with water of which temperature was at room temperature.

This bundle was treated with white water in the pulper as in Example 1 and most of the packaging material could not be macerated, and remained as foreign matter in the pulp slurry.

Comparative Example 3

A packaging material was obtained by laminating a 25$\mu$m-thick polyethyleneterephtharate film with a mill wrapping sheet by a hot-press method and the resultant packaging material was good in gas-barrier property and water-proofness.

A bundle of waste paper stock, comprising waste milk cartons pressed by a baler, which is packed by the packaging material remained intact when contact was made with water of which temperature was at room temperature.

This bundle was treated with white water in the pulper as in Example 1 and most of the packaging material could not be macerated, and remained as foreign matter in the pulp slurry.

Comparative Examples 4 to 6

In Comparative Examples 4 to 6, measurements were performed by varying the thickness of the a mill wrapping sheet. In Comparative Examples 5 and 6, a moisture-proof mill wrapping sheet was employed.

The test results are set forth in Table 3.

Test Method;

Pretreatment, Tensile Strength and Elongation ; JIS P8111
Tear Strength ; JIS P8116
Moisture permeability ; JIS Z0208(B method)
Coefficient of Friction ; J.TAPPI. 30-79
Maceration Degree ; To warm water stirred with 2000 r.p.m at 50°C in a 1-liter stainless steel vessel (a pulp macerator) fitted with a stirrer was added one sample sheet (1cmx1cm). The time (sec.) required to be dissolved in the water are reported.

Resistance to water: To warm water stirred with 2000 r.p.m. at 50°C in a 1-liter stainless steel vessel (a pulp macerator) fitted with a stirrer, was added one sample sheet (1cmx1cm). The time required to dissolve in the water is reported as follows:

1----poor to 5----good

11

(Table 3)

| | Boric acid or Borax | Thickness of Paper (μm) | Thickness of Laminate (μm) | Properties of Packaging Material | | | | | | |
| --- | --- | --- | --- | --- | --- | --- | --- | --- | --- | --- |
| | | | | Weight per 1m² unit (g/m²) | Tensile Strength (Kg) | Tear Strength (g), Fiber | Moisture Permeability (g/m²/24h) | Degree of Maceration (sec) | Water Resistance | Coefficient of Friction |
| Example 9 | added | 139.0 | 16.1 | 94.1 | 8.5 | 211/228 | 41.5 | 158 | 4 | 0.46 |
| | no | | | 95.2 | 7.1 | 105/123 | 100< | 141 | 4 | 0.42 |
| Example 10 | added | 221.8 | 15.0 | 179.0 | 27.0 | 201/265 | 39.0 | 132 | 4 | 0.46 |
| | no | | | 179.1 | 12.8 | 175/215 | 100< | 152 | 4 | 0.43 |
| Example 11 | added | 223.5 | 15.0 | 181.6 | 30.2 | 221/276 | 30.2 | 125 | 4 | 0.43 |
| | no | | | 180.1 | 24.2 | 186/235 | 48.2 | 136 | 4 | 0.44 |
| Example 12 | added | 133.0 | 20.0 | 186.5 | 29.0 | 263/284 | 28.7 | 156 | 4 | 0.47 |
| | no | | | 181.9 | 20.1 | 213/239 | 100< | 151 | 4 | 0.48 |
| Comparative Example 4 | - | 133.0 | - | 76.1 | 7.6 | 105/123 | 100< | 165 | 4 | 0.46 |
| Comparative Example 5 | - | 190.5 | - | 163.2 | 13.9 | 136/184 | 52.8 | 190 | 3 | 0.37 |
| Comparative Example 6 | - | 188.2 | - | 160.0 | 14.5 | 150/188 | 72.0 | 200 | 4 | 0.36 |

Industrial Application

The packaging material according to the present invention, which comprises a water-soluble polymer adjustable in water-solubility by varying the temperature of water used therefore and/or a water-soluble resin and vegetable fiber as reinforcing components, is strong enough for the use under the normal conditions, and widely usable for various kinds of packaging because the materials are good in transparency, moisture permeability, moisture absorbing property, heat-sealability, printability, pealability, gas barrier property, resistance to oils, resistance to air or water.

The method of the invention enables efficient manufacture of the packaging material by; utilizing the conventional molding method to be applied to normal thermoplastic resin; making a filmy matter, such as film or sheet from aforesaid polymer; or spreading an aqueous solution of said polymer and/or its composition on a material paper sheet or using wet laminates of material paper sheets. The drying step can be carried out at high-temperature, thereby enabling the operation at high-speed and on a steady state.

The packing material of the present invention is dissolved and liquidized into solution when contact is made with appropriate warm water, and need not be removed from the bundle of waste paper stock which is wrapped or bound by the material.

Further, when used as waste paper stock, the material exhibits effects similar to that of a paper strengthening agent to the product.

Conventional packaging materials, such as polyethylene- or polypropylene-made strips or twisted strings, are insoluble in warm water, and remained intact in a pulper as foreign matter, with causing trouble in recycling operation of waste paper stock. In comparison with this, when the packaging material of the present invention is applied as strips, they can be dissolved into appropriate warm water and thus a bundle of waste paper stock wrapped with said strips can be reuse without unwrapping the strips. In addition to this it is expected that the string dissolved with the bundle exhibits as a paper strengthening agent, therefore the present invention has various industrial applications.

## Claims

1. A packaging material comprising a polymer and/or its composition wherein said polymer is insoluble in water at temperatures below a predetermined one, while at levels above the predetermined temperature the polymer or its composition becomes water-soluble.

2. A packaging material according to claim 1 wherein said polymer contains boric acid and/or borax.

3. A packaging material according to claim 1 or 2 wherein said polymer is a modified polyvinyl alcohol resin.

4. A packaging material according to claims 1 to 3 wherein said polymer or its composition further comprises a water-soluble resin and/or vegetable fiber as a reinforcing component.

5. A packaging material according to claim 1 wherein said packaging material is laminated with at least one material paper sheet.

6. A method of the manufacture of a packaging material wherein said method comprises forming a filmy matter from the polymer or its composition as claimed in claim 1.

7. A method according to claim 6 wherein said method comprises forming a filmy matter from the boric acid- and/or borax-containing polymer and/or its composition claimed in claim 1.

8. A method of the manufacture of a packaging material wherein said method comprises spreading an aqueous solution of the polymer and/or its composition as claimed in claim 1, or an aqueous solution of the polymer or its composition which further contains boric acid and/or borax, by the conventional method on a material paper sheet, and subsequently drying the resulting sheet.

9. A method of the manufacture of a packaging material wherein said method comprises laminating two or more material paper sheets using an aqueous solution of the polymer and/or composition as claimed in claim 1 as an adhesive layer, or an aqueous solution of the polymer and/or its composition which further contains boric acid and/or borax as an adhesive layer, and subsequently drying the resulting laminated sheet.

10. A method of the manufacture of a packaging material wherein said method comprises further laminating a material paper sheet on the layer of the polymer or its composition claimed in claim 1 or 5 as the packaging material by the aid of an adhesive.

11. A method according to claims 6~10 wherein said polymer is a modified polyvinyl alcohol resin.

12. A method for disposing a bundle of goods to be packed with being wrapped by the packaging material as claimed in claim 1 or 5 wherein said method comprises making the bundle come in contact with appropriate warm water which can make said polymer being solved.

13. A method according to claim 12 wherein said good to be packed is waste paper stock.

14. A method according to claim 12 wherein said method comprises wrapping or binding the goods to be packed with the packaging material as claimed in claim 1 or 5 which is in the form of a binding material selected from the group consisting of strips; long, narrow strips; bands; ropes; or tapes, and then making the bundle come in contact with appropriate warm water which can make said polymer being solved.

# INTERNATIONAL SEARCH REPORT

International Application No PCT/JP92/00791

## I. CLASSIFICATION OF SUBJECT MATTER (if several classification symbols apply, indicate all) 6

According to International Patent Classification (IPC) or to both National Classification and IPC

Int. Cl$^5$  D21H17/20, D21H19/56, B32B27/10, B32B27/10

## II. FIELDS SEARCHED

### Minimum Documentation Searched 7

| Classification System | Classification Symbols |
|---|---|
| IPC | D21H17/20-17/37, D21H19/56-19/60, B32B27/30, B32B27/10, C08L29/04 |

Documentation Searched other than Minimum Documentation
to the Extent that such Documents are Included in the Fields Searched 8

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| X | JP, A, 63-264646 (The Clorox Co.), November 1, 1988 (01. 11. 88), & EP, A, 284334 & US, A, 4801636 & US, A, 4972017 | 1-3, 6, 7 |
| X | JP, A, 64-14244 (The Clorox Co.), January 18, 1989 (18. 01. 89), & EP, A, 291198 & BR, A, 8802311 & AU, A, 8816082 & US, A, 4885105 | 1-3, 6, 7 |
| X | JP, A, 2-108534 (Kao Corp.), February 20, 1990 (20. 02. 90), (Family: none) | 1-3, 6, 7 |
| X | JP, A, 56-80457 (Nippon Shigyo K.K. and two others), July 1, 1981 (01. 07. 81), (Family: none) | 4, 5 |
| X | JP, A, 51-12889 (Sanyo Kokusaku Pulp Co., Ltd.), January 31, 1976 (31. 01. 76), (Family: none) | 4, 5 |

\* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| September 14, 1992 (14. 09. 92) | October 6, 1992 (06. 10. 92) |

| International Searching Authority | Signature of Authorized Officer |
|---|---|
| Japanese Patent Office | |